# FASCICULE DE BREVET EUROPEEN

(11) **EP 3 203 128 B1**
(45) Date de publication et mention de la délivrance du brevet: **21.11.2018**
(21) Numéro de dépôt: 17305099.8
(22) Date de dépôt: 30.01.2017
(51) Int. Cl.: F16L 1/23, B65H 51/14

(54) **TENSIONNEUR POUR LE SERRAGE ET POUR L'AVANCEMENT CONTRÔLÉS D'UN ÉLÉMENT ALLONGÉ**
SPANNVORRICHTUNG ZUM KONTROLLIERTEN EINSPANNEN UND VORSCHIEBEN EINES LÄNGLICHEN ELEMENTS
TENSIONER FOR THE CONTROLLED CLAMPING AND FORWARD MOVEMENT OF AN ELONGATE ELEMENT

(30) Priorité: 04.02.2016 FR 1650906
(43) Date de publication de la demande: 09.08.2017
(73) Titulaire: REEL, 69450 Saint-Cyr-au-Mont-d'Or (FR)
(72) Inventeur: KONATE, Karamoko, 17220 SAINT-ROGATIEN (FR)
(74) Mandataire: Jacobacci Coralis Harle

(56) Documents cités:
- FR-A1- 2 345 389
- US-B1- 6 439 445

## Description

### DOMAINE TECHNIQUE AUQUEL SE RAPPORTE L'INVENTION

La présente invention concerne un tensionneur pour le serrage et l'avancement contrôlés d'un élément allongé, notamment pour enrouler/dérouler un câble, un flexible, un pipeline ou un ombilical par rapport à un organe de réception (par exemple un tambour ou un panier).

### ARRIERE-PLAN TECHNOLOGIQUE

Dans différents domaines industriels, certains éléments allongés doivent être tirés, à vitesse et à tension constantes, pour leur enroulement/déroulement par rapport à un organe de réception (un tambour ou un panier par exemple).

C'est en particulier le cas des éléments allongés mis en oeuvre dans le domaine offshore, à savoir les câbles, les flexibles, les pipelines ou les ombilicaux.

Cette manoeuvre est classiquement effectuée au moyen d'un dispositif appelé « tensionneur » qui assure, d'une part, une prise en charge par serrage d'un tronçon de l'élément allongé et, d'autre part, l'avancement longitudinal de ce dernier.

Pour cela, il existe notamment des tensionneurs qui comportent un châssis équipé de trois caissons de guidage agencés autour d'un axe de passage :
- un caisson de guidage central, qui s'étend sur un plan central passant par l'axe de passage, et
- deux caissons de guidage latéraux, qui sont agencés de manière symétrique par rapport audit plan central.

Ce tensionneur comprend des moyens de commande qui sont adaptés à piloter, d'une part, un cheminement synchrone, et dans un même sens, d'un brin avant de différents caissons de guidage et, d'autre part, des moyens de manoeuvre pour régler un écartement équidistant de ces brins avant de caissons de guidage par rapport à l'axe de passage.

De tels tensionneurs sont par exemple décrits dans le document FR-2 345 389.

Mais ces tensionneurs actuels ne sont pas entièrement satisfaisants ; en particulier, la mise en place de l'élément allongé au sein du tensionneur peut s'avérer relativement complexe et fastidieuse.

En particulier, le châssis est généralement fermé en fonctionnement pour résister aux efforts de serrage. Ce châssis doit alors être ouvrable, pour faciliter l'introduction de l'élément allongé par une manoeuvre en translation au travers de la partie ouvrable de ce châssis.

De plus, les moyens de manoeuvre de tels tensionneurs sont souvent relativement complexes.

### OBJET DE L'INVENTION

L'invention concerne donc un tensionneur pour le serrage et l'avancement contrôlés d'un élément allongé, notamment pour enrouler/dérouler un câble, un flexible, un pipeline ou un ombilical par rapport à un organe de réception (par exemple un tambour ou un panier).

Ce tensionneur comprend au moins un châssis qui porte trois caissons de guidage agencés autour d'un axe de passage :
- un caisson de guidage central, qui s'étend sur un plan central passant par ledit axe de passage, et
- deux caissons de guidage latéraux, qui sont agencés de manière symétrique par rapport audit plan central et chacun dans un plan définissant un angle compris entre 115° et 125°, et de préférence entre 118° et 122°, par rapport audit plan central.

Les caissons de guidage comprennent chacun un corps support sur lequel est guidée une chaîne de guidage qui est entraînée par au moins une roue motorisée.

Les chaînes de guidage comportent chacune un brin avant, destiné à assurer une ligne de contact sur ledit élément allongé, qui s'étend parallèlement et en regard dudit axe de passage.

Les caissons de guidage coopèrent avec ledit châssis par le biais de moyens de manoeuvre.

Le tensionneur comprend encore des moyens de commande, pour piloter un cheminement synchrone, et dans un même sens, desdits brins avant, et pour régler un écartement équidistant desdits brins avant par rapport audit axe de passage.

Lesdits moyens de manoeuvre comprennent :
(i) des premiers moyens de manoeuvre, pour la manoeuvre en translation rectiligne dudit caisson de guidage central, selon une direction orientée dans ledit plan central et perpendiculairement audit axe de passage, et
(ii) des seconds moyens de manoeuvre, comprenant :
   - des moyens supports comprenant au moins un élément balancier portant ledit caisson de guidage latéral associé, lequel au moins un élément balancier comporte une extrémité proximale montée pivotante sur ledit châssis et une extrémité distale montée pivotante sur ledit caisson de guidage latéral associé, respectivement autour d'axes de rotation s'étendant parallèlement audit axe de passage, laquelle extrémité distale porte le caisson de guidage latéral associé, et
   - des moyens actionneurs pour la manoeuvre desdits moyens supports et dudit caisson de guidage latéral associé,
et au niveau de chaque caisson de guidage latéral, les moyens supports comportent deux éléments balanciers, à savoir un élément balancier extérieur et un élément balancier intérieur ménagé entre ledit élément balancier extérieur et l'axe de passage, en outre lesdits éléments balanciers comportent un entraxe correspondant à la distance entre leurs axes de rotation respectifs, et ledit élément balancier extérieur et ledit élément balancier intérieur comportent chacun un entraxe dont la longueur est fixe,
pour la manoeuvre en translation rectiligne, ou au moins sensiblement rectiligne, de chacun desdits caissons de guidage latéraux, respectivement selon une direction définissant un angle compris entre 115° et 125°, et de préférence entre 118° et 122°, par rapport audit plan central.

Un tel tensionneur a l'intérêt de permettre une mise en place rapide et efficace de l'élément allongé au sein du tensionneur.

Ce tensionneur a en outre l'intérêt de pouvoir présenter une tolérance de réception intéressante, par exemple comprise entre 40 mm et 700 mm, combinée avec une capacité élevée en traction et en retenue.

De plus, les moyens de manoeuvre sont relativement simples, simplifiant les opérations de maintenance.

Le tensionneur peut également être totalement électrique, sans aucune fonction nécessitant une puissance hydraulique.

D'autres caractéristiques non limitatives et avantageuses du tensionneur conforme à l'invention, sont les suivantes :
- le tensionneur présente un premier angle défini entre ledit au moins un élément balancier et un plan général du châssis, et un second angle défini entre ledit au moins un élément balancier et le caisson de guidage latéral associé ; et les moyens actionneurs sont agencés pour une manoeuvre en rotation desdits moyens supports et dudit caisson de guidage latéral associé, pour générer une augmentation dudit premier angle proportionnellement à une réduction dudit second angle, et inversement ;
- les moyens actionneurs des seconds moyens de manoeuvre comprennent au moins un actionneur linéaire comportant une extrémité proximale montée pivotante sur le châssis et une extrémité distale montée pivotante sur le caisson de guidage latéral, respectivement autour d'axes de rotation s'étendant parallèlement à l'axe de passage ; dans ce cas, de préférence, la chaîne de guidage de chaque caisson de guidage latéral comporte ledit brin avant et un brin arrière opposé, et (i) les moyens supports comportent un élément balancier extérieur dont l'extrémité distale se situe au niveau dudit brin arrière, et (ii) l'extrémité distale dudit au moins un actionneur linéaire se situe au niveau du brin avant ;
- la chaîne de guidage de chaque caisson de guidage latéral comporte ledit brin avant et un brin arrière opposé, l'extrémité distale de l'élément balancier extérieur se situe au niveau dudit brin arrière, l'extrémité distale de l'élément balancier intérieur se situe au niveau du brin avant, et le cas échéant, ledit au moins un actionneur linéaire est agencé de sorte que son extrémité distale s'étend coaxialement à l'extrémité distale de l'élément balancier intérieur, et son extrémité proximale est ménagée entre le caisson de guidage central et l'extrémité proximale dudit élément balancier intérieur ;
- les premiers moyens de manoeuvre comprennent un système d'actionneurs linéaires, lesquels actionneurs linéaires sont agencés parallèlement au plan central et ménagés entre ledit caisson de guidage central et ledit châssis ;
- l'axe de passage s'étend horizontalement, ou au moins approximativement horizontalement, et le plan central du caisson de guidage central s'étend verticalement, ou au moins approximativement verticalement ;
- le châssis a une forme générale de plateau comportant deux faces opposées : une face inférieure destinée à reposer sur un élément de réception, et une face supérieure coopérant avec les extrémités proximales des moyens supports et avec les moyens actionneurs des seconds moyens de manoeuvre ;
- le tensionneur comprend une ouverture longitudinale qui est définie entre les brins avant des caissons latéraux en regard, ménagée en regard du caisson de guidage central, dont la largeur est fonction de l'écartement desdits brins avant par rapport audit axe de passage ;
- le châssis du tensionneur comporte au moins deux logements ménagés parallèlement et à distance l'un de l'autre, pour la réception de la fourche d'un engin de manoeuvre ;
- la roue motorisée consiste en une roue motorisée par le biais d'un moteur électrique et les moyens de manoeuvre comprennent des moyens actionneurs électriques.

La présente invention concerne également un système pour la manoeuvre et pour le stockage d'un élément allongé, notamment un câble, un flexible, un pipeline ou un ombilical, comprenant :
- un organe de réception dudit élément allongé, par exemple un tambour ou un panier, et
- un tensionneur tel que défini ci-dessus.

La présente invention concerne également un procédé pour le serrage et pour l'avancement contrôlés d'un élément allongé, notamment pour enrouler/dérouler un câble, un flexible, un pipeline ou un ombilical par rapport à un organe de réception, par la mise en oeuvre d'un tensionneur selon l'invention.

Ce procédé comprend les étapes suivantes :
- un pilotage des moyens de manoeuvre dudit tensionneur, pour augmenter l'écartement équidistant des brins avant des chaînes de guidage de ses caissons de guidage, par rapport à l'axe de passage,
- une mise en place dudit élément allongé sur le caisson de guidage central dudit tensionneur, le cas échéant au travers de son ouverture longitudinale,
- un pilotage des moyens de manoeuvre, pour réduire l'écartement équidistant desdits brins avant par rapport à l'axe de passage jusqu'à ce que chaque brin avant génère une ligne de contact sur ledit élément allongé,
- un cheminement synchrone, et dans un même sens, desdits brins avant du tensionneur.

### DESCRIPTION DETAILLEE D'UN EXEMPLE DE RÉALISATION

La présente invention sera encore illustrée, sans être aucunement limitée, par la description suivante d'un mode de réalisation particulier en relation avec les figures annexées dans lesquelles :
- la figure 1 est une vue en perspective d'un tensionneur selon l'invention, dans une configuration inactive dans laquelle le caisson de guidage central porte un élément allongé et dans laquelle les caissons de guidage latéraux sont agencés à distance dudit élément allongé ;
- la figure 2 est une vue en coupe du tensionneur représenté sur la figure 1, selon un plan de coupe vertical transversal passant par les actionneurs linéaires pour la manoeuvre des caissons de guidage latéraux ;
- la figure 3 est une vue de côté du tensionneur représenté sur les figures 1 et 2, maintenant en configuration active pour le serrage et l'avancement contrôlés de l'élément allongé rapporté ;
- la figure 4 est une vue en coupe de la figure 3, selon le plan IV-IV passant par l'un des éléments balanciers formant une partie des moyens de manoeuvre des caissons de guidage latéraux et par les actionneurs linéaires pour la manoeuvre des caissons de guidage latéraux ;
- la figure 5 est également une vue en coupe de la figure 3, ici selon le plan de coupe V-V passant par les moyens de manoeuvre du caisson de guidage central ;
- la figure 6 est une vue en coupe du tensionneur en configuration active autour d'un élément allongé dont le diamètre est réduit par rapport à celui des figures 4 et 5, selon un plan correspondant au plan IV-IV de la figure 3 ;
- la figure 7 est une vue en coupe du tensionneur en configuration active autour d'un élément allongé selon la figure 6, selon un plan correspondant au plan de coupe V-V de la figure 3.

Le tensionneur 1 selon l'invention est destiné à équiper un système de stockage comportant notamment un organe de réception (non représenté) sur/dans lequel est destiné à être emmagasiné un élément allongé E.

L'élément allongé E consiste avantageusement en un câble, un flexible, un pipeline ou un ombilical. Un tel élément allongé E est avantageusement utilisé dans le domaine offshore.

De manière générale, cet élément allongé E a une forme générale cylindrique, avec notamment un axe longitudinal E' et une surface extérieure comportant une section circulaire.

Le diamètre de l'élément allongé E, susceptible d'être pris en charge par le tensionneur 1 (désigné encore « tolérance de réception »), varie avantageusement entre 40 et 700 mm.

L'organe de réception consiste par exemple, de manière classique en soi, en un tambour ou un panier sur/dans lequel l'élément allongé E est destiné à être enroulé/déroulé.

Un tel système de stockage appartient par exemple à une installation de fabrication de l'élément allongé E dans laquelle ce dernier doit être tiré, à vitesse et tension constantes, depuis une unité de fabrication dudit élément allongé E jusqu'à une unité de stockage (comprenant l'organe de réception précité).

Le système de stockage peut alors comprendre plusieurs tensionneurs 1 implantés en série, pour la manoeuvre et le guidage de l'élément allongé E entre deux points du système de stockage.

Le tensionneur 1 est apte à assurer, de manière classique en soi, une prise en charge par serrage d'un tronçon de l'élément allongé E, et un avancement piloté de ce dernier (avantageusement avec une vitesse et une tension constantes).

### Tensionneur selon l'invention

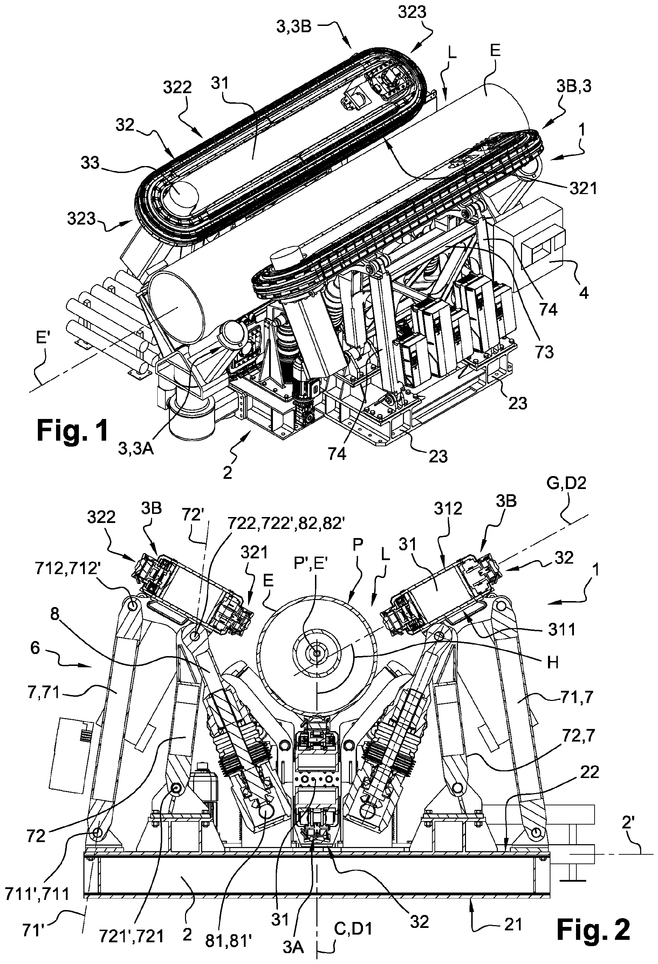

Tel que décrit ci-dessous en relation avec les figures 1 et 2, le tensionneur 1 selon l'invention comprend un châssis 2 (en forme de plateforme horizontale) qui porte trois caissons de guidage 3 définissant un passage P destiné à recevoir un tronçon de l'élément allongé E.

Le passage P de ce tensionneur 1 définit un axe longitudinal P', désigné ci-après « axe de passage » (figure 2). Cet axe de passage P' s'étend ici horizontalement, ou au moins approximativement horizontalement.

Les caissons de guidage 3 sont agencés régulièrement, ou au moins approximativement régulièrement, autour de l'axe longitudinal P' du passage P.

Le tensionneur 1 comprend ainsi :
- un caisson de guidage central 3A, s'étendant sur un plan central C passant par l'axe de passage P', et
- deux caissons de guidage latéraux 3B, agencés symétriquement de part et d'autre du plan central C précité.

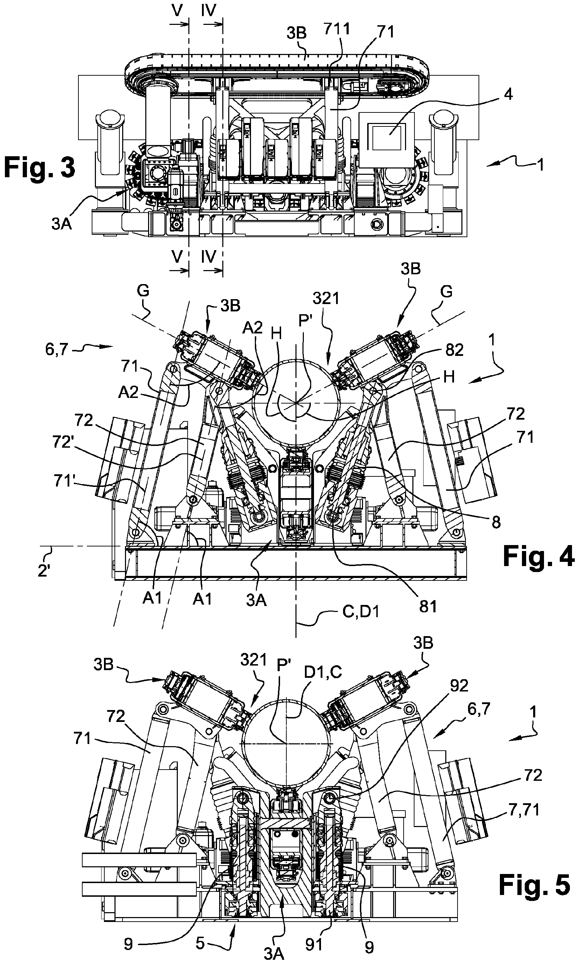

En l'espèce, le plan central C du caisson de guidage central 3A s'étend verticalement, ou au moins approximativement verticalement. Et les caissons latéraux 3B sont avantageusement agencés chacun dans un plan G définissant un angle H (orienté du côté du châssis 2) compris entre 115° et 125°, et de préférence entre 118° et 122°, par rapport au plan central C (figure 4).

Les plans G des deux caissons latéraux 3B sont avantageusement agencés de sorte à couper le plan central C selon une même droite d'intersection.

Cette droite d'intersection est avantageusement destinée à s'étendre coaxialement, ou au moins approximativement coaxialement, par rapport à l'axe longitudinal P' du passage P.

Les trois caissons de guidage 3 sont identiques. Ils comprennent chacun un corps support 31 sur lequel est guidée une chaîne de guidage 32 qui est entraînée par une roue motorisée 33.

Le corps support 31 a une forme générale parallélépipédique, avec deux faces opposées 311, 312 (ménagées de part et d'autre de son plan général).

La roue motorisée 33 consiste avantageusement en une roue motorisée par le biais d'un moteur électrique.

Les chaînes de guidage 32 ont chacune un agencement oblong (figure 1), définissant deux brins longitudinaux parallèles (avantageusement rectilignes), à savoir :
- un brin avant 321, destiné à assurer une ligne de contact sur l'élément allongé E, qui s'étend parallèlement et en regard de l'axe de passage P', et
- un brin arrière 322, opposé.

Ces chaînes de guidage 32 comportent également deux brins de liaison 323, en arc de cercle, qui raccordent les brins avant 321 et arrière 322.

Les brins avant 321 des caissons de guidage latéraux 3B définissent entre eux une ouverture longitudinale supérieure L, s'ouvrant en regard du caisson du guidage central 3A et d'une largeur variable (par exemple avec une largeur maximale comprise entre 800 et 1000 mm).

Les brins avant 321 des trois caissons de guidage 3 forment ainsi des génératrices d'un cylindre virtuel dans lequel s'inscrit le passage P, et dont l'axe longitudinal correspond à l'axe de passage P'.

Le diamètre de ce cylindre virtuel est en plus variable de sorte à s'adapter à différents diamètres de l'élément allongé E. Ce jeu en diamètre constitue ainsi le domaine de tolérance du tensionneur 1.

Les caissons de guidage 3 sont pour cela mobiles entre deux configurations :
- une configuration inactive, dans laquelle les caissons de guidage latéraux 3B sont ménagés à distance d'un élément allongé E rapporté dans le passage P (figure 2), et
- une configuration active, dans laquelle les brins avant 321 des trois caissons de guidage 3 assurent une ligne de contact sur l'élément allongé E rapporté dans le passage P (correspondant aux figures 3 à 7).

A cet effet, les caissons de guidage 3 sont manoeuvrables en translation rectiligne, ou au moins sensiblement rectiligne, de sorte à maintenir avantageusement deux paramètres d'agencement, à savoir :
- un écartement équidistant, ou au moins approximativement équidistant, de leur brin avant 321 respectif par rapport à l'axe de passage P' et
- une répartition angulaire régulière, ou au moins approximativement régulière, autour de cet axe de passage P'.

Ces paramètres d'agencement sont avantageusement maintenus au moins dans le domaine de tolérance du tensionneur 1, par exemple pour une course comprise entre 40 et 700 mm par rapport à l'axe de passage P' (correspondant ainsi au diamètre de l'élément allongé E et du passage P).

Cette manoeuvre particulière des caissons de guidage 3 est assurée par :
- des moyens de commande 4, décrits plus en détails par la suite, et
- des moyens de manoeuvre 5, 6, adaptés à assurer le déplacement des caissons de guidage 3.

Les moyens de manoeuvre 5, 6 comprennent :
- des premiers moyens de manoeuvre 5 (visibles notamment sur la figure 5), pour la manoeuvre en translation rectiligne du caisson de guidage central 3A, selon une direction D1 orientée dans le plan central Ç et perpendiculairement à l'axe de passage P', et
- des second moyens de manoeuvre 6 (figure 2 notamment), pour la manoeuvre en translation rectiligne, ou au moins sensiblement rectiligne, de chacun des caissons de guidage latéraux 3B, respectivement selon une direction D2 définissant un angle compris entre 115° et 125°, et de préférence entre 118° et 122°, par rapport au plan central C (correspondant à l'angle H précité défini avec le plan central C).

Les seconds moyens de manoeuvre 6 de chaque caisson de guidage latéral 3B comprennent :
- des moyens supports 7 comprenant des éléments balanciers 71, 72, pour former un ensemble de guidage du type parallélogramme / trapèze déformable, et
- des moyens actionneurs 8, pour la manoeuvre des moyens supports 7 et du caisson de guidage latéral 3B associé.

Les éléments balanciers 71, 72 portent le caisson de guidage 3B associé.

Les moyens supports 7 de chaque caisson de guidage latéral 3B, comportent deux éléments balanciers :
- un élément balancier extérieur 71, et
- un élément balancier intérieur 72, ménagé entre ledit élément balancier extérieur 71, d'un côté, et l'axe de passage P' et le caisson de guidage central 3A, d'un autre côté.

Chaque élément balancier 71, 72 a une forme générale d'un étrier ou d'un U, comprenant une traverse horizontale 73 reliée par deux montants verticaux 74 (figure 1).

Les éléments balanciers 71, 72 sont montés pivotants entre le châssis 2 et le caisson de guidage latéral 3B associé, autour d'axes de rotation s'étendant parallèlement à l'axe de passage P'.

Les éléments balanciers 71, 72, et le caisson de guidage latéral 3B associé, s'étendent ainsi au-dessus et en regard du châssis 2

Chaque élément balancier 71, 72 comporte deux extrémités :
- une extrémité proximale 711, 721, inférieure, montée pivotante sur le châssis 2 autour d'un axe de rotation 711', 721', et
- une extrémité distale 712, 722, supérieure, qui porte le caisson de guidage latéral 3B associé et qui est montée pivotante sur ce dernier autour d'un axe de rotation 712', 722'.

Les différents axes de rotation 711', 712', 721', 722' s'étendent parallèlement à l'axe de passage P', mais aussi parallèlement les uns par rapport aux autres.

Ces éléments balanciers 71, 72 comportent chacun un entraxe correspondant à la distance séparant leurs axes de rotation 711', 712' ; 721', 722' respectifs. L'entraxe de chaque élément balancier 71, 72 a une longueur fixe.

Les éléments balanciers 71, 72 ont un agencement et un ratio en longueur particuliers pour assurer le déplacement rectiligne, ou au moins approximativement rectiligne, du caisson de guidage latéral 3B associé.

Ce déplacement rectiligne, ou au moins approximativement rectiligne, est avantageusement maintenu au moins dans le domaine de tolérance du tensionneur 1, par exemple pour une course comprise entre 40 et 700 mm par rapport à l'axe de passage P'.

Par « approximativement rectiligne », on englobe une course en translation du caisson de guidage latéral 3B, éventuellement curviligne, dans laquelle son plan G est maintenu dans un domaine d'angle H (du côté du châssis 2) compris entre 115° et 125°, et de préférence entre 118° et 122°, par rapport au plan central C (figure 2).

On englobe ainsi une translation curviligne du brin avant 321 du caisson de guidage latéral 3B, mais dont l'aspect général est pratiquement rectiligne en raison de la grande valeur du rayon de la translation curviligne et de la faible longueur de course.

Pour cela, les deux éléments balanciers 71, 72 portant un caisson de guidage latéral 3B s'étendent ici parallèlement, ou au moins approximativement parallèlement, l'un par rapport à l'autre.

L'extrémité distale 712 de l'élément balancier extérieur 71 se situe au niveau du brin arrière 322 du caisson de guidage latéral 3B associé, solidarisée avec une face 311 inférieure de son corps support 31 ; l'extrémité distale 722 de l'élément balancier intérieur 72 se situe au niveau du brin avant 321 de ce même caisson de guidage latéral 3B, solidarisée avec une même face 311 inférieure de son corps support 31.

L'élément balancier extérieur 71 comporte un entraxe dont la valeur est supérieure à l'entraxe de l'élément balancier intérieur 72.

Par exemple, la valeur d'entraxe de l'élément balancier extérieur 71 est comprise entre 1 et 2 fois la valeur d'entraxe de l'élément balancier intérieur 72.

L'extrémité proximale 721 de l'élément balancier intérieur 72 est en plus décalée verticalement par rapport à l'extrémité proximale 711 de l'élément balancier extérieur 71, vers le haut et du côté de l'axe de passage P'.

Ce déport vertical additionné à l'entraxe de l'élément balancier intérieur 72, est inférieur à la valeur de l'entraxe de l'élément balancier extérieur 71.

D'autre part, la distance entre les extrémités proximales 711, 721 des deux éléments balanciers 71, 72 est identique, ou au moins approximativement identique, à la distance séparant les extrémités distales 712, 722 de ces mêmes éléments balanciers 71, 72.

Chaque élément balancier 71, 72 définit encore un plan général qui passe par ses axes de rotation 711', 712', 721', 722', désignés respectivement par les repères 71', 72'.

Chaque élément balancier 71, 72 définit ainsi deux angles (figure 4) :
- un premier angle A1 délimité entre le plan général 71', 72' de cet élément balancier 71, 72 et le plan général 2' du châssis 2 ici horizontal (s'ouvrant vers le caisson de guidage central 3A), et
- un second angle A2 délimité entre le plan général 71', 72' de cet élément balancier 71, 72 et le plan G du caisson du guidage latéral 3B associé (s'ouvrant également vers le caisson de guidage central 3A).

Lors du déplacement d'un des caissons de guidage latéraux 3B, le premier angle A1 et le second angle A2 évoluent inversement l'un par rapport à l'autre.

En particulier, lors de l'écartement des caissons de guidage 3, la valeur du premier angle A1 augmente proportionnellement à une réduction du second angle A2 ; inversement, lors du rapprochement des caissons de guidage 3, la valeur du premier angle A1 diminue proportionnellement à une augmentation du second angle A2.

A ce sujet, le caisson de guidage latéral 3B suit une trajectoire circulaire autour de l'axe de rotation 711' de l'extrémité proximale 711 de l'élément balancier extérieur 71, selon un rayon correspondant à l'entraxe de ce dernier.

Simultanément, le caisson de guidage latéral 3B subit une rotation sur lui-même, autour de l'axe de rotation 712' de l'extrémité distale 712 de ce même élément balancier extérieur 71.

Les moyens actionneurs 8 sont agencés pour piloter la manoeuvre en rotation des moyens supports 7, générant ainsi un déplacement en translation rectiligne (ou au moins sensiblement rectiligne) du caisson de guidage latéral 3B associé.

Pour cela, ces moyens actionneurs 8 comprennent ici un actionneur linéaire 8, avantageusement un vérin (par exemple un vérin électrique ou un vérin hydraulique).

Cet actionneur linéaire 8 comporte deux extrémités : - une extrémité proximale 81, montée pivotante sur le châssis 2, et - une extrémité distale 82, montée pivotante sur le caisson de guidage latéral 3B.

Ces extrémités 81, 82 définissent respectivement des axes de rotation 81' et 82' qui s'étendent également parallèlement à l'axe de passage P'.

L'extrémité distale 82 de l'actionneur linéaire 8 se situe au niveau du brin avant 321 du caisson de guidage latéral 3B. Son axe de rotation 81' s'étend avantageusement coaxialement par rapport à l'axe de pivotement 722' de l'extrémité distale 722 de l'élément balancier intérieur 72.

Cet agencement permet d'optimiser l'effort de traction exercé par l'actionneur linéaire 8 sur le caisson de guidage latéral 3B.

L'extrémité proximale 81 de cet actionneur linéaire 8 se situe quant à elle dans l'espace s'étendant entre l'extrémité proximale 722 de l'élément balancier intérieur 72 et le caisson de guidage central 3A.

De leur côté, les premiers moyens de manoeuvre 5 comprennent un système d'actionneurs linéaires 9, avantageusement un ensemble de vérins (par exemple des vérins électriques ou des vérins hydrauliques) (figure 5).

Les actionneurs linéaires 9 sont agencés parallèlement au plan central C et sont orientés chacun selon un axe vertical (ou au moins approximativement vertical).

Chaque actionneur linéaire 9 comporte deux extrémités : - une extrémité proximale 91, inférieure et fixe, solidarisée avec le châssis 2, et - une extrémité distale 92, supérieure et mobile, solidarisée avec le caisson de guidage central 3A (en particulier avec son corps support 31).

Le châssis 2 a une forme générale de plateau horizontal comportant deux faces opposées (figure 2 notamment) :
- une face inférieure 21, destinée à reposer et à être fixée sur un élément de réception, par exemple le pont d'un navire ou le sol d'une usine, et
- une face supérieure 22, en regard de laquelle s'étendent les caissons de guidage 3.

Cette face supérieure 22 coopère ainsi avec, d'une part, les extrémités proximales 711, 721 des éléments balanciers 71, 72 et, d'autre part, l'extrémité proximale 81, 91 des actionneurs linéaires 8, 9.

Cet agencement participe ainsi à former l'ouverture longitudinale supérieure L, s'ouvrant en regard du caisson du guidage central 3A.

Le châssis 2 comporte encore avantageusement deux logements 23 ménagés parallèlement et à distance l'un de l'autre (figure 1), pour la réception de la fourche d'un engin de manoeuvre (non représentée).

Les moyens de commande 4 assurent deux principales fonctions :
- piloter le cheminement synchrone, et dans un même sens, des brins avant 321 des caissons de guidage 3, et
- piloter les moyens de manoeuvre 5, 6, de sorte à maintenir l'écartement équidistant des brins avant 321 de ces caissons de guidage 3 par rapport à l'axe de passage P' et de sorte à figer (au moins approximativement) la position de cet axe de passage P'.

Les moyens de commande 4 comprennent pour cela des moyens du type ordinateur associé à un programme d'ordinateur.

L'ordinateur intègre en particulier un automate programmable, associé à des codeurs absolus solidaires/couplés aux actionneurs linéaires.

Le programme d'ordinateur comprend avantageusement :
- des premiers moyens de code programme adaptés à piloter la roue motorisée 33 des caissons de guidage 3, pour obtenir le cheminement synchrone et dans un même sens des brins avant 321, et
- des seconds moyens de code programme adaptés à piloter les moyens de manoeuvre 5, 6, de sorte à maintenir l'écartement équidistant des brins avant 321 des caissons de guidage 3 par rapport à l'axe de passage P',
lorsque ledit programme d'ordinateur est exécuté par lesdits moyens de commande 4.

En particulier, les seconds moyens de code programme sont adaptés à générer une course identique, en longueur et dans un même sens (écartement ou rapprochement), des brins avant 321 des trois caissons de guidage 3 par rapport à l'axe de passage P'.

### Mise en oeuvre du tensionneur selon l'invention

En pratique, les moyens de commande 4 vont permettre le serrage et l'avancement contrôlés de l'élément allongé E.

Pour la mise en place d'un élément allongé E au sein du passage P, les moyens de commande 4 pilotent les moyens de manoeuvre 5, 6 du tensionneur 1 dans une configuration inactive (figures 1 et 2).

A cet effet, l'écartement de chacun des brins avant 321, par rapport à l'axe de passage P', est augmenté d'une course identique en longueur.

Pour cela, d'une part, le caisson de guidage central 3A subit une translation rectiligne verticale vers le bas, selon la direction D1. Ce mouvement est obtenu par la rétractation des actionneurs linéaires 9 dédiés.

D'autre part, chacun des caissons de guidage latéraux 3B subit une translation rectiligne, ou au moins sensiblement rectiligne, inclinée vers le haut et en écartement par rapport à l'axe de passage P', respectivement selon la direction D2 précitée. Ce mouvement est obtenu par le basculement vers l'extérieur de ses éléments balanciers 71, 72 du fait du déploiement de ses actionneurs linéaires 8 dédiés.

Cette manoeuvre permet notamment d'accroitre la largeur de l'ouverture longitudinale supérieure L, délimitée par les brins avant 321 en regard des deux caissons de guidage latéraux 3B. Ainsi, si nécessaire, l'ouverte longitudinale supérieure L est ajustée de sorte que sa largeur soit supérieure au diamètre de l'élément allongé E à rapporter.

L'élément allongé E peut ensuite être mis en place au sein du passage P, le cas échéant au travers de l'ouverture longitudinale supérieure L, de sorte à venir reposer sur le brin avant 321 du caisson de guidage central 3A (figures 1 et 2).

Les moyens de commande 4 pilotent ensuite les moyens de manoeuvre 5, 6, de sorte à réduire l'écartement équidistant des brins avant 321 par rapport à l'axe de passage P', cela jusqu'à ce que chaque brin avant 321 génère une ligne de contact sur l'élément allongé E (figures 3 à 7).

Pour cela :
- le caisson de guidage central 3A subit une translation rectiligne verticale vers le haut, selon la direction D1 précitée, par le déploiement des actionneurs linéaires 9 dédiés, et
- chacun des caissons de guidage latéraux 3B subit une translation rectiligne, ou au moins sensiblement rectiligne, inclinée vers le bas et en direction de l'axe de passage P', respectivement selon la direction D2 précitée, obtenue par le basculement vers l'intérieur de ses éléments balanciers 71, 72 du fait de la rétractation de ses actionneurs linéaires 8 dédiés.

Les figures 4 à 7 illustrent le domaine de tolérance du tensionneur 1, avec deux diamètres différents d'éléments allongés E susceptibles d'être pris en charge par le tensionneur 1.

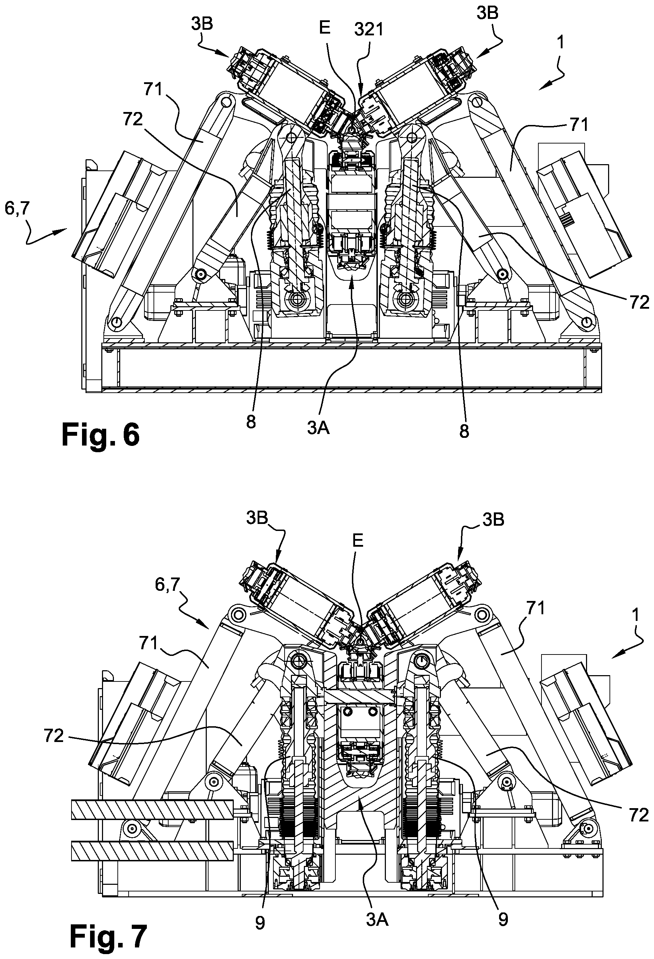

Par exemple, les figures 4 et 5 illustrent la prise en charge d'un élément allongé E dont le diamètre est de l'ordre de 700 mm ; les figures 6 et 7 illustrent la prise en charge d'un élément allongé E dont le diamètre est de l'ordre de 40 mm.

Dans cette configuration active, les moyens de commande 4 provoquent ensuite un cheminement synchrone, et dans un même sens, des brins avant 321 du tensionneur 1 de sorte à provoquer le déplacement souhaité de l'élément allongé E (à une vitesse et dans un sens souhaités).

Dans le cas de tensionneurs 1 montés en série, leurs moyens de commande 4 respectifs sont avantageusement pilotables d'une manière centralisée, de sorte à coordonner le cheminement synchrone, et dans un même sens, des brins avant 321 de ces tensionneurs 1.

En fin de traction, les moyens de commande 4 peuvent à nouveau piloter les moyens de manoeuvre 5, 6 du tensionneur 1 en configuration inactive (figures 1 et 2), de manière à libérer l'élément allongé E.

De manière générale, la capacité de ce tensionneur 1, en traction et en retenue, est avantageusement de l'ordre de 10 à 20 tonnes.

Ce tensionneur peut être utilisé pour enrouler sous tension les câbles sur les tambours de treuils, à quai ou bien directement montés à bord des bateaux. Il peut également être utilisé pour dérouler/enrouler des flexibles, des pipelines rigides et/ou des ombilicaux.

Le tensionneur peut être manipulé à l'aide d'un chariot élévateur.

Il est possible de le charger dans un conteneur spécial afin de pouvoir le transporter sans difficultés, ou de pouvoir installer une protection mécanique boulonnée permettant de protéger les composants fragiles, en particulier les composants électriques et les patins.

## Revendications

1. Tensionneur pour le serrage et pour l'avancement contrôlés d'un élément allongé (E), notamment pour enrouler/dérouler un câble, un flexible, un pipeline ou un ombilical sur un organe de réception,
lequel tensionneur (1) comprend au moins un châssis (2) qui porte trois caissons de guidage (3) agencés autour d'un axe de passage (P') :
- un caisson de guidage central (3A), qui s'étend sur un plan central (C) passant par ledit axe de passage (P'),
- deux caissons de guidage latéraux (3B), qui sont agencés de manière symétrique par rapport audit plan central (C), lesquels caissons de guidage latéraux (3B) sont agencés chacun dans un plan (G) définissant un angle (H) compris entre 115° et 125° par rapport audit plan central (C),
lesquels caissons de guidage (3) comprennent chacun un corps support (31) sur lequel est guidée une chaîne de guidage (32) qui est entraînée par au moins une roue motorisée (33),
lesquelles chaînes de guidage (32) comportent chacune un brin avant (321), destiné à assurer une ligne de contact sur ledit élément allongé (E), qui s'étend parallèlement et en regard dudit axe de passage (P'),
lesquels caissons de guidage (3) coopèrent avec ledit châssis (2) par le biais de moyens de manoeuvre (5, 6), et
lequel tensionneur (1) comprend des moyens de commande (4), pour piloter un cheminement synchrone, et dans un même sens, desdits brins avant (321), et pour régler un écartement équidistant desdits brins avant (321) par rapport audit axe de passage (P'),
lesquels moyens de manoeuvre (5, 6) comprennent :
(i) des premiers moyens de manoeuvre (5), pour la manoeuvre en translation rectiligne dudit caisson de guidage central (3A), selon une direction (D1) orientée dans ledit plan central (C) et perpendiculairement audit axe de passage (P'), et
(ii) des seconds moyens de manoeuvre (6), comprenant :
- des moyens supports (7) comprenant au moins un élément balancier (71, 72) portant ledit caisson de guidage latéral (3B) associé, lequel au moins un élément balancier (71, 72) comporte une extrémité proximale (711, 721) montée pivotante sur ledit châssis (2) et une extrémité distale (712, 722) montée pivotante sur ledit caisson de guidage latéral (3B) associé, respectivement autour d'axes de rotation (711', 712' ; 721', 722') s'étendant parallèlement audit axe de passage (P'), laquelle extrémité distale (712, 722) porte le caisson de guidage latéral (3B) associé, et
- des moyens actionneurs (8) pour la manoeuvre desdits moyens supports (7) et dudit caisson de guidage latéral (3B) associé,
pour la manoeuvre en translation rectiligne, ou au moins sensiblement rectiligne, de chacun desdits caissons de guidage latéraux (3B), respectivement selon une direction (D2) définissant un angle (H) compris entre 115° et 125° par rapport audit plan central (C), **caractérisé en ce que**, au niveau de chaque caisson de guidage latéral (3B), les moyens supports (7) comportent deux éléments balanciers :
- un élément balancier extérieur (71), et
- un élément balancier intérieur (72), ménagé entre ledit élément balancier extérieur (71) et l'axe de passage (P'),
**en ce que** lesdits éléments balanciers (71, 72) comportent un entraxe correspondant à la distance entre leurs axes de rotation (711', 712' ; 721', 722') respectifs,
et **en ce que** ledit élément balancier extérieur (71) et ledit élément balancier intérieur (72) comportent chacun un entraxe dont la longueur est fixe.

2. Tensionneur selon la revendication 1, **caractérisé en ce que** les moyens actionneurs (8) des seconds moyens de manoeuvre (6) comprennent au moins un actionneur linéaire (8) comportant une extrémité proximale (81) montée pivotante sur le châssis (2) et une extrémité distale (82) montée pivotante sur le caisson de guidage latéral (3B), respectivement autour d'axes de rotation (81', 82') s'étendant parallèlement à l'axe de passage (P').

3. Tensionneur selon la revendication 2, **caractérisé en ce que** la chaîne de guidage (32) de chaque caisson de guidage latéral (3B) comporte le brin avant (321) et un brin arrière (322) opposé,
**en ce que** les moyens supports (7) comportent un élément balancier extérieur (71) dont l'extrémité distale (712) se situe au niveau dudit brin arrière (322),
et **en ce que** l'extrémité distale (82) dudit au moins un actionneur linéaire (8) se situe au niveau du brin avant (321).

4. Tensionneur selon la revendication 1, en combinaison avec la revendication 2, **caractérisé en ce que** la chaîne de guidage (32) de chaque caisson de guidage latéral (3B) comporte le brin avant (321) et un brin arrière (322) opposé,
**en ce que** l'extrémité distale (712) de l'élément balancier extérieur (71) se situe au niveau dudit brin arrière (322),
**en ce que** l'extrémité distale (722) de l'élément balancier intérieur (72) se situe au niveau du brin avant (321), et
le cas échéant, ledit au moins un actionneur linéaire (8) est agencé de sorte que :
- son extrémité distale (82) s'étend coaxialement à l'extrémité distale (711) de l'élément balancier intérieur (72), et
- son extrémité proximale (81) est ménagée entre le caisson de guidage central (3A) et l'extrémité proximale (721) dudit élément balancier intérieur (72).

5. Tensionneur selon l'une quelconque des revendications 1 à 4, **caractérisé en ce que** les premiers moyens de manoeuvre (5) comprennent un système d'actionneurs linéaires (9), agencés parallèlement au plan central (C) et ménagés entre ledit caisson de guidage central (3A) et ledit châssis (2).

6. Tensionneur selon l'une quelconque des revendications 1 à 5, **caractérisé en ce que** l'axe de passage (P') s'étend horizontalement, ou au moins approximativement horizontalement,
et **en ce que** le plan central (C) du caisson de guidage central (3A) s'étend verticalement, ou au moins approximativement verticalement.

7. Tensionneur selon l'une quelconque des revendications 1 à 6, **caractérisé en ce que** le châssis (2) a une forme générale de plateau comportant deux faces opposées :
- une face inférieure (21), destinée à reposer sur un élément de réception, et
- une face supérieure (22) coopérant avec les extrémités proximales (711, 721) des moyens supports (7) et avec les moyens actionneurs (8, 9) des seconds moyens de manoeuvre (6).

8. Tensionneur selon l'une quelconque des revendications 1 à 7, **caractérisé en ce qu'**il comprend une ouverture longitudinale (L) qui est définie entre les brins avant (321) des caissons de guidage latéraux (3B) en regard,
laquelle ouverture longitudinale (L) est ménagée en regard du caisson de guidage central (3A),
et **en ce que** la largeur de ladite ouverture longitudinale (L) est fonction de l'écartement desdits brins avant (321) par rapport audit axe de passage (P').

9. Procédé pour le serrage et pour l'avancement contrôlés d'un élément allongé (E), notamment pour enrouler/dérouler un câble, un flexible, un pipeline ou un ombilical sur un organe de réception, par la mise en oeuvre d'un tensionneur selon l'une quelconque des revendications 1 à 8,
**caractérisé en ce qu'**il comprend les étapes suivantes :
- un pilotage des moyens de manoeuvre (5, 6) dudit tensionneur (1), pour augmenter l'écartement équidistant de ses brins avant (321) par rapport à l'axe de passage (P'),
- une mise en place dudit élément allongé (E) sur le caisson de guidage central (3A) dudit tensionneur (1), le cas échéant au travers de son ouverture longitudinale (L),
- un pilotage des moyens de manoeuvre (5, 6), pour réduire l'écartement équidistant des brins avant (321) par rapport à l'axe de passage (P') jusqu'à ce que chaque brin avant (321) génère une ligne de contact sur ledit élément allongé (E),
- un cheminement synchrone, et dans un même sens, desdits brins avant (321) du tensionneur (1).

## Patentansprüche

1. Spannvorrichtung zum kontrollierten Einspannen und Vorschieben eines länglichen Elements (E), insbesondere zum Aufrollen/Abrollen eines Kabels, eines Schlauchs, einer Rohrleitung oder einer Verbindungsleitung auf einen bzw. von einem Aufnahmeorgan, wobei die Spannvorrichtung (1) wenigstens ein Grundgestell (2) aufweist, das drei um eine Durchlaufachse (P') angeordnete Führungskästen (3) aufweist:
- einen zentralen Führungskasten (3A), der sich in einer durch die Durchlaufachse (P') gehenden Ebene (C) erstreckt,
- zwei seitliche Führungskästen (3B), die zur zentralen Ebene (C) symmetrisch angeordnet sind, wobei die seitlichen Führungskästen (3B) jeweils in einer Ebene (G) angeordnet sind, die in Bezug auf die zentrale Ebene (C) einen Winkel (H) zwischen 115° und 125° definiert,
wobei die Führungskästen (3) jeweils einen Stützkörper (31) aufweisen, auf dem eine Führungskette (32) geführt wird, die durch wenigstens ein motorisiertes Rad (33) angetrieben wird,
wobei die Führungsketten (32) jeweils ein vorderes Trum (321) aufweisen, das dazu bestimmt ist, auf dem länglichen Element (E) eine Kontaktlinie sicherzustellen, die sich parallel zur Durchlaufachse (P') und dieser zugewandt erstreckt,
wobei die Führungskästen (3) mit dem Grundgestell (2) über Betätigungsmittel (5, 6) zusammenwirken und
wobei die Spannvorrichtung (1) Steuerungsmittel (4) aufweist, um ein synchrones und in die gleiche Richtung weisendes Fortbewegen der vorderen Trümmer (321) zu steuern und um einen gleichbleibenden Abstand der vorderen Trümmer (321) von der Durchlaufachse (P') zu regeln,
wobei die Betätigungsmittel (5, 6)
(i) erste Betätigungsmittel (5) zum geradlinigen translatorischen Betätigen des zentralen Führungskastens (3A) in einer in der zentralen Ebene (C) liegenden und zur Durchlaufachse (P') senkrechten Richtung (D1) und
(ii) zweite Betätigungsmittel (6), die
- Stützmittel (7) mit wenigstens einem Auslegerelement (71, 72), das den zugeordneten seitlichen Führungskasten (3B) trägt, aufweisen, wobei das wenigstens eine Auslegerelement (71, 72) ein auf dem Grundgestell (2) schwenkbar befestigtes proximales Ende (711, 721) und ein an dem seitlichen Führungskasten (3B) schwenkbar befestigtes distales Ende (712, 722) aufweist, wobei die Enden jeweils um sich zur Durchlaufachse (P') parallel erstreckende Drehachsen (711', 712'; 721', 722') schwenken, wobei das distale Ende (712, 722) den zugeordneten seitlichen Führungskasten (3B) trägt, und
- Aktuatormittel (8) zum Betätigen der Stützmittel (7) und des zugeordneten seitlichen Führungskastens (3B) zum geradlinigen oder wenigstens näherungsweise geradlinigen translatorischen Betätigen jedes der seitlichen Führungskästen (3B) in einer Richtung (D2), die in Bezug auf die zentrale Ebene (C) einen Winkel (H) zwischen 115° und 125° definiert, aufweisen,
aufweisen,
**dadurch gekennzeichnet, daß** die Stützmittel (7) für jeden seitlichen Führungskasten (3B) zwei Auslegerelemente aufweisen:
- ein äußeres Auslegerelement (71) und
- ein inneres Auslegerelement (72), das zwischen dem äußeren Auslegerelement (71) und der Durchlaufachse (P') angeordnet ist, daß die Auslegerelemente (71, 72) einen Achsabstand aufweisen, der dem Abstand zwischen deren jeweiligen Drehachsen (711', 712'; 721', 722') entspricht,
und daß das äußere Auslegerelement (71) und das innere Auslegerelement (72) jeweils einen Achsabstand aufweisen, dessen Länge fest ist.

2. Spannvorrichtung gemäß Anspruch 1, **dadurch gekennzeichnet, daß** die Aktuatormittel (8) der zweiten Betätigungsmittel (6) wenigstens einen linearen Aktuator (8) aufweisen, der ein auf dem Grundgestell (2) schwenkbar befestigtes proximales Ende (81) und ein an dem seitlichen Führungskasten (3B) schwenkbar befestigtes distales Ende (82) aufweist, wobei die Enden jeweils um sich zur Durchlaufachse (P') parallel erstreckende Drehachsen (81', 82') schwenken.

3. Spannvorrichtung gemäß Anspruch 2, **dadurch gekennzeichnet, daß** die Führungskette (32) jedes seitlichen Führungskastens (3B) das vordere Trum (321) und ein entgegengesetztes hinteres Trum (322) aufweist,
daß die Stützmittel (7) ein äußeres Auslegerelement (71) aufweisen, dessen distales Ende (712) im Bereich des hinteren Trums (322) angeordnet ist,
und daß das distale Ende (82) des wenigstens einen linearen Aktuators (8) im Bereich des vorderen Trums (321) angeordnet ist.

4. Spannvorrichtung gemäß Anspruch 1 in Verbindung mit Anspruch 2, **dadurch gekennzeichnet, daß** die Führungskette (32) jedes seitlichen Führungskastens (3B) das vordere Trum (321) und ein entgegengesetztes hinteres Trum (322) aufweist,
daß das distale Ende (712) des äußeren Auslegerelements (71) im Bereich des hinteren Trums (322) angeordnet ist,
daß das distale Ende (722) des inneren Auslegerelements (72) im Bereich des vorderen Trums (321) angeordnet ist und
wobei der wenigstens eine lineare Aktuator (8) gegebenenfalls derart angeordnet ist, daß
sich sein distales Ende (82) koaxial zum distalen Ende (711) des inneren Auslegerelements (72) erstreckt und
sein proximales Ende (81) zwischen dem zentralen Führungskasten (3A) und dem proximalen Ende (721) des inneren Auslegerelements (72) angeordnet ist.

5. Spannvorrichtung gemäß einem der Ansprüche 1 bis 4, **dadurch gekennzeichnet, daß** die ersten Betätigungsmittel (5) ein System (9) aus linearen Aktuatoren aufweisen, die parallel zur zentralen Ebene (C) angeordnet und zwischen dem zentralen Führungskasten (3A) und dem Grundgestell (2) eingerichtet sind.

6. Spannvorrichtung gemäß einem der Ansprüche 1 bis 5, **dadurch gekennzeichnet, daß** sich die Durchlaufachse (P') horizontal oder wenigstens näherungsweise horizontal erstreckt und daß sich die zentrale Ebene (C) des zentralen Führungskastens (3A) vertikal oder wenigstens näherungsweise vertikal erstreckt.

7. Spannvorrichtung gemäß einem der Ansprüche 1 bis 6, **dadurch gekennzeichnet, daß** das Grundgestell (2) die allgemeine Form einer Platte mit zwei entgegengesetzten Seiten hat:
- eine Unterseite (21), die dazu bestimmt ist, auf einem Aufnahmeelement zu ruhen, und
- eine Oberseite (22), die mit den proximalen Enden (711, 721) der Stützmittel (7) und mit den Aktuatormitteln (8, 9) der zweiten Betätigungsmittel (6) zusammenwirkt.

8. Spannvorrichtung gemäß einem der Ansprüche 1 bis 7, **dadurch gekennzeichnet, daß** sie eine längs verlaufende Öffnung (L) aufweist, die zwischen den vorderen Trümmern (321) der einander zugewandten seitlichen Führungskästen (3B) definiert ist,
wobei die längs verlaufende Öffnung (L) gegenüber dem zentralen Führungskasten (3A) angeordnet ist,
und daß die Breite der längs verlaufenden Öffnung (L) vom Abstand der vorderen Trümmer (321) von der Durchlaufachse (P') abhängt.

9. Verfahren zum kontrollierten Einspannen und Vorschieben eines länglichen Elements (E), insbesondere zum Aufrollen/Abrollen eines Kabels, eines Schlauchs, einer Rohrleitung oder einer Verbindungsleitung auf einen bzw. von einem Aufnahmeorgan durch Anwendung einer Spannvorrichtung gemäß einem der Ansprüche 1 bis 8,
**dadurch gekennzeichnet, daß** es die folgenden Schritte aufweist:
- eine Steuerung der Betätigungsmittel (5, 6) der Spannvorrichtung (1) zum Erhöhen des äquidistanten Abstands seiner vorderen Trümmer (321) von der Durchlaufachse (P'),
- ein Einsetzen des länglichen Elements (E) auf den zentralen Führungskasten (3A) der Spannvorrichtung (1), gegebenenfalls durch deren längs verlaufende Öffnung (L),
- eine Steuerung der Betätigungsmittel (5, 6) zum Verringern des äquidistanten Abstands der vorderen Trümmer (321) von der Durchlaufachse (P') bis jedes vordere Trum (321) auf dem länglichen Element (E) eine Kontaktlinie erzeugt,
- ein synchrones und in die gleiche Richtung weisendes Fortbewegen der vorderen Trümmer (321) der Spannvorrichtung (1).

## Claims

1. Tensioner for the gripping and the controlled forward movement of an elongate element (E), in particular for winding/unwinding a cable, a hose, a pipeline or an umbilical on a reception member,
wherein said tensioner (1) comprises at least one frame (2) that carries three guide boxes (3) arranged around a passage axis (P'):
- a central guide box (3A), which extends over a central plane (C) passing through said passage axis (P'),
- two lateral guide boxes (3B), which are arranged symmetrically with respect to said central plane (C), wherein said lateral guide boxes (3B) are each arranged in a plane (G) defining an angle (H) of between 115° and 125° with respect to said central plane (C),
wherein said guide boxes (3) each comprise a support body (31) on which a guide chain (32) is guided, which is driven by at least one motorized wheel (33),
wherein said guide chains (3) each comprise a front strand (321), intended to provide a contact line on said elongate element (E), which extends parallel to and opposite said passage axis (P'),
said guide boxes (3) cooperating with said frame (2) by means of maneuvering means (5, 6) and
said tensioner (1) comprises control means (4) for controlling a synchronous conveying in the same direction of said front strands (321) and for adjusting an equidistant separation of said front strands (321) with respect to said passage axis (P'),
wherein said maneuvering means (5, 6) comprise:
(i) first maneuvering means (5) for the maneuvering of said central guide box (3A) in rectilinear translation, in a direction (D1) oriented in said central plane (C) and perpendicular to said passage axis (P'), and
(ii) second maneuvering means (6), comprising:
- support means (7) comprising at least one rocker means (71, 72) supporting said lateral guide box (3B) associated, wherein said at least one rocker means (71, 72) comprises a proximal end (711, 722) mounted so as to pivot on said frame (2) and a distal end (712, 722) mounted so as to pivot on said lateral guide box (3B), respectively about rotation axes (711', 712'; 721', 722') lying parallel to said passage axis (P'), wherein said proximal end (711, 722) supports said lateral guide box (3B) associated, and
- actuator means (8) for maneuvering said support means (7) and said associated lateral guide box (3B),
for maneuvering each of said lateral guide boxes (3B) in rectilinear, or at least substantially rectilinear, translation, respectively in a direction (D2) defining an angle (H) of between 115° and 125° with respect to said central plane (C),
**characterized in that**, at each lateral guide box (3B), the support means (7) comprise two rocker elements:
- an external rocker element (71), and
- an internal rocker element (72), provided between said external rocker element (71) and the passage axis (P'),
**in that** said rocker elements (71, 72) have a distance between centers corresponding to the distance between their respective rotation axes (711', 712'; 721', 722'),
and **in that** said external rocker element (71) and said internal rocker element (72) each comprise a distance between centers wherein the length is fixed.

2. Tensioner according to claim 1, **characterized in that** the actuator means (8) of the second maneuvering means (6) comprise at least one linear actuator (8) comprising a proximal end (81) mounted so as pivot on the frame (2) and a distal end (82) mounted so as to pivot on the lateral guide box (3B), respectively about rotation axes (81', 82') extending parallel to the passage axis (P').

3. Tensioner according to claim 2, **characterized in that** the guide chain (32) of each lateral guide box (3B) comprises the front strand (321) and an opposite rear strand (322),
**in that** the support means (7) comprise an external rocker element (71) wherein the distal end (712) is situated at said rear strand (322),
and **in that** the distal end (82) of said at least one linear actuator (8) is situated at the front strand (321).

4. Tensioner according to claim 4, in combination with claim 2, **characterized in that** the guide chain (32) of each lateral guide box (3B) comprises the front strand (321) and an opposite rear strand (322),
**in that** the distal end (712) of the external rocker element (71) is situated at said rear strand (322),
**in that** the distal end (722) of the internal rocker element (72) is situated at the front strand (321) and
where applicable, said at least one linear actuator (8) is arranged so that:
- its distal end (82) extends coaxially with the distal end (711) of the internal rocker element (72), and
- its proximal end (81) is provided between the central guide box (3A) and the proximal end (721) of said internal rocker element (72).

5. Tensioner according to any of claims 1 to 4, **characterized in that** the first maneuvering means (5) comprise a system of linear actuators (9), arranged parallel to the central plane (C) and provided between said central guide box (3A) and said frame (2).

6. Tensioner according to any of claims 1 to 5, **characterized in that** passage axis (P') extends horizontally, or at least approximately horizontally,
and **in that** the central plane (C) of the central guide box (3A) extends vertically, or at least approximately vertically.

7. Tensioner according to any of claims 1 to 6, **characterized in that** the frame (2) is in the general form of a plate comprising two opposite faces:
- a bottom face (21) intended to rest on a reception element, and
- a top face (22) cooperating with the proximal ends (711, 721) of the support means (7) and with the actuator means (8, 9) of the second maneuvering means (6).

8. Tensioner according to any of claims 1 to 7, **characterized in that** it comprises a longitudinal opening (L) that is defined between the front strands (321) of the lateral guide boxes (3B) opposite,
wherein longitudinal opening (L) is arranged opposite the central guide box (3A),
and **in that** the width of the longitudinal opening (L) depends on the separation of said front strands (321) with respect to said passage axis (P').

9. Method for the controlled clamping and forward movement of an elongate element (E), in particular for winding/unwinding a cable, a hose, a pipeline or an umbilical on a reception member, by the use of a tensioner according to any of claims 1 to 8,
**characterized in that** it comprises the following steps:
- control of the means (5, 6) for maneuvering said tensioner (1), to increase the equidistant separation of its front strands (321) with respect to the passage axis (P'),
- placing of said elongate element (E) on the central guide box (3A) of said tensioner (1), where applicable through its longitudinal opening (L);
- control of the maneuvering means (5, 6), to reduce the equidistant separation of the front strands (321) with respect to the passage axis (P') until each front strand (321) gives rise to a contact line on said elongate element (E),
- synchronous conveying, in the same direction, of said front strands (321) of the tensioner (1).
